(19) Europäisches Patentamt
European Patent Office
Office européen des brevets

(11) **EP 2 990 765 A1**

(12) **EUROPEAN PATENT APPLICATION**

(43) Date of publication:
**02.03.2016 Bulletin 2016/09**

(51) Int Cl.:
*G01C 21/36* (2006.01)  *G01C 15/00* (2006.01)
*G05D 1/02* (2006.01)  *G06T 7/00* (2006.01)

(21) Application number: **15181714.5**

(22) Date of filing: **20.08.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **27.08.2014 JP 2014172560**

(71) Applicant: **Kabushiki Kaisha TOPCON
Tokyo 174 (JP)**

(72) Inventors:
• **SASAKI, You
Itabashi-ku, Tokyo 174-8580 (JP)**
• **ITO, Tadayuki
Itabashi-ku, Tokyo 174-8580 (JP)**

(74) Representative: **Eisenführ Speiser
Patentanwälte Rechtsanwälte PartGmbB
Postfach 31 02 60
80102 München (DE)**

(54) **IMAGE PROCESSING DEVICE, IMAGE PROCESSING METHOD, AND PROGRAM THEREFOR**

(57) The position and the attitude of a device or a member are determined. A camera 115, in which exterior orientation parameters are not determined, is photographed by a camera 113, in which exterior orientation parameters in an IMU coordinate system are determined. The camera 115 is rotatable around a shaft, in which the direction of the rotational shaft is preliminarily set, and a distance between the camera 113 and the camera 115 is known. In this condition, by analyzing the image of the camera 115 photographed by the camera 113, the exterior orientation parameters of the camera 115 are calculated.

Fig. 1

**Description**

BACKGROUND OF THE INVENTION

Technical Field

The present invention relates to a technique of determining the position and the attitude of a device or a member.

Background Art

A technique for obtaining spatial information for maps and the like is publicly known as disclosed in, for example, Japanese Unexamined Patent Application Laid-Open No. 2013-40886. In this technique, while a vehicle, which is equipped with an IMU (Inertial Measurement Unit) and an optical device such as a camera and a laser scanner, travels, the location of the vehicle is measured by the IMU, and the surrounding conditions of the vehicle are simultaneously measured by the optical device.

In this technique, exterior orientation parameters (position and attitude) of the camera or the laser scanner must be known in advance. In general, an IMU, a camera, a laser scanner, and the like, are preinstalled in a factory, and procedures (calibration) for determining the exterior orientation parameters are performed. However, there may be cases in which a user desires to set or change the position and the attitude of the camera or the laser scanner himself or herself.

In this case, calibration must be performed after fixing of the camera or the laser scanner to the vehicle is completed. At that time, the work efficiency of the calibration is improved if the position and the attitude of the camera or the laser scanner are approximately determined.

SUMMARY OF THE INVENTION

In view of these circumstances, an object of the present invention is to provide a technique for easily determining the position and the attitude of a device or a member.

A first aspect of the present invention has an image processing device including an image data receiving circuit and an exterior orientation parameter calculating circuit. The image data receiving circuit having a structure that receives data of an image obtained by photographing a device or a member, in which exterior orientation parameters in a predetermined coordinate system are unknown, with a reference camera in which exterior orientation parameters in the predetermined coordinate system are determined. The exterior orientation parameter calculating circuit having a structure that calculates the exterior orientation parameters in the predetermined coordinate system of the device or the member based on the photographed image. The device or the member is rotatable around a rotation shaft which is in a predetermined direction. The exterior orientation parameters in the predetermined coordinate system of the device or the member are calculated after a distance between the reference camera and the device or the member is determined.

The device or the member of the present invention, in which the exterior orientation parameters are unknown, includes various optical devices such as a camera and a laser scanner, electronic devices in which information of the located position is important (for example, a GPS antenna and a GNSS antenna), inertial measurement units in which information of the position and the attitude is important, and members to which these devices are fixed (such as a board-like member as a base). Moreover, the above device also includes a directional antenna, an ultrasonic measuring device, and the like, in which the position and the attitude are important. The exterior orientation parameters are defined as parameters which determine the position and the attitude of a target device or a target member. In addition, the exterior orientation parameters of a device or a member, in which the attitude thereof is not important, are defined as elements which determine the position of the device or the member.

According to a second aspect of the present invention, in the first aspect of the present invention, the distance between the reference camera and the device or the member is a distance L between the reference camera and a specific portion of the device or the member. The exterior orientation parameter calculating circuit determines a direction from the reference camera to the specific portion based on image coordinate values of the specific portion of the device or the member in the photographed image. The exterior orientation parameter calculating circuit then calculates the position in the predetermined coordinate system of the specific portion from the direction and the distance L.

According to a third aspect of the present invention, in the second aspect of the present invention, an attitude in the predetermined coordinate system of the device or the member is calculated by selecting the specific portion at two points.

A fourth aspect of the present invention has an image processing method including receiving data of an image and calculating exterior orientation parameters. The image is obtained by photographing a device or a member, in which exterior orientation parameters in a predetermined coordinate system are unknown, with a reference camera in which exterior orientation parameters in the predetermined coordinate system are determined. The exterior orientation parameters are calculated in the predetermined coordinate system of the device or the member based on the photographed image. In this case, the device or the member is rotatable around a rotation shaft which is in a predetermined direction. The exterior orientation parameters in the predetermined coordinate system of the device or the member are calculated after a distance between the reference camera and the device or the member is determined.

A fifth aspect of the present invention has a recording medium in which a program read and executed by a computer is stored. The program allows the computer to receive data of an image obtained by photographing a device or a member, in which exterior orientation parameters in a predetermined coordinate system are unknown, with a reference camera, in which exterior orientation parameters in the predetermined coordinate system are determined, and to calculate the exterior orientation parameters in the predetermined coordinate system of the device or the member based on the photographed image. In this case, the device or the member is rotatable around a rotation shaft that is in a predetermined direction. The exterior orientation parameters in the predetermined coordinate system of the device or the member are calculated after a distance between the reference camera and the device or the member is determined.

According to the present invention, the position and the attitude of a device or a member are easily determined.

BRIEF DESCRIPTION OF DRAWINGS

Fig. 1 is a schematic drawing of an embodiment.
Fig. 2 is a block diagram of a processing part.
Fig. 3 is a schematic drawing showing a photographed image.
Fig. 4 is a schematic drawing showing a positional relationship between two cameras.

PREFERRED EMBODIMENTS OF THE INVENTION

1. First Embodiment

Structure

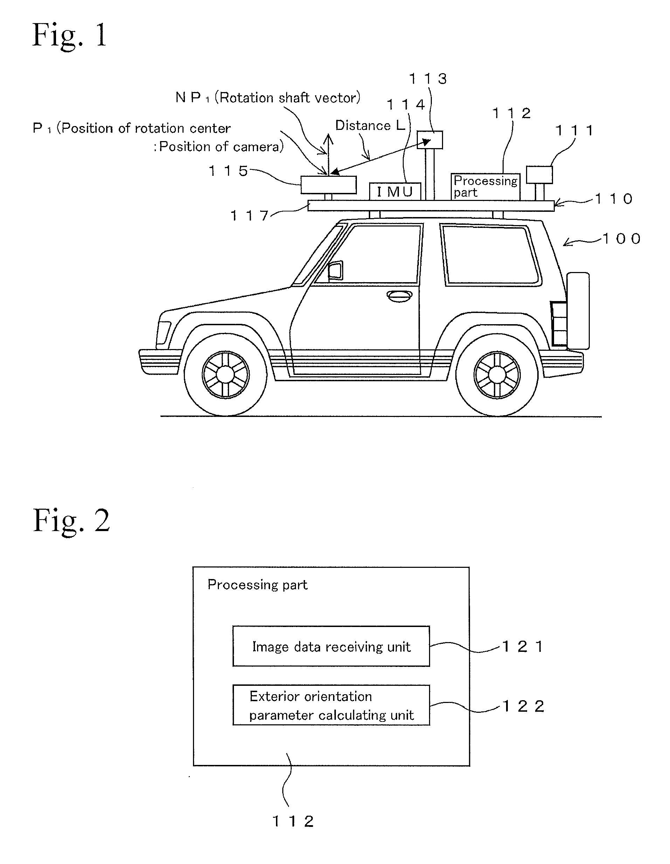

Fig. 1 shows a schematic drawing of an embodiment. Fig. 1 shows a vehicle 100 mounted with a measuring system 110. The measuring system 110 has a base 117 on which a GNSS unit 111, a processing part 112, a camera 113, an IMU unit 114, and a camera 115 are mounted.

The base 117 is fixed on the vehicle 100, whereby the measuring system 110 is mounted on the vehicle 100. The GNSS unit 111, the processing part 112, the camera 113, the IMU unit 114, and the camera 115 are secured to the vehicle 100 via the base 117.

The GNSS unit 111 receives navigation signals from a navigation satellite forming a GNSS (Global Navigation Satellite System) and outputs its location information and time information, which is calibrated and has high precision. The processing part 112 has a calculation function, described later.

The camera 113 is secured toward a front side of the vehicle 100 and photographs a moving image of the front side of the vehicle 100. Exterior orientation parameters of the camera 113 with respect to the vehicle 100 (IMU 114) are determined beforehand. As the camera 113, a panoramic camera, which photographs conditions in 360 degrees, or a wide-angle camera, which photographs a wide angle range, may be used.

The IMU 114 is an inertial measurement unit, and it detects acceleration and measures its change of location and direction. The position and the attitude of the IMU 114 with respect to the vehicle 100 are determined beforehand. In this example, the position of the IMU 114 is used as the location of the vehicle 100. The IMU 114 is preliminarily calibrated based on a ground coordinate system. The ground coordinate system is an absolute coordinate system fixed relative to the ground and is a three-dimensional orthogonal coordinate system that describes the location on the ground, which is measured by the GNSS unit 111. Moreover, the IMU 114 is calibrated at predetermined timing based on the positional information and the time information, which are obtained from the GNSS unit 111.

The camera 115 is capable of photographing a moving image, and it is rotatable in a horizontal plane and is fixable in a direction desired by a user. The camera 115 has a rotation shaft, in which the direction is fixed (fixed in a vertical direction), but can be positioned freely as desired by a user. Therefore, exterior orientation parameters of the camera 115 with respect to the IMU 114 are not clearly determined immediately after the camera 115 is mounted to the vehicle. In this example, the position of a rotation center $P_1$ is used as the position of the camera 115. While the position of the rotation center $P_1$ is unknown, a distance L from the camera 113 to the rotation center $P_1$ is known by setting or measuring it beforehand.

The processing part 112, the camera 113, the IMU 114, and the camera 115 are provided with a synchronizing signal using GNSS from the GNSS unit 111, and they operate synchronously.

The processing part 112 is hardware that functions as a computer and includes a CPU, a memory, a variety of interfaces, and other necessary electronic circuits. The processing part 112 can be understood to be hardware including each functioning unit shown in Fig. 2. Each of the functioning units shown in Fig. 2 may be constructed of software, or one or a plurality of the functioning units may be constructed of dedicated hardware. Programs for executing the function of the processing part 112 are stored in the memory of the processing part 112. This memory also stores data relating to the exterior orientation parameters and the like of the camera 113, etc., which are obtained in advance. It should be noted that the program for executing the processing part 112 may be stored in an external storage media and be provided therefrom. Moreover, each of the functioning units shown in Fig. 2 may be constructed of a dedicated operational circuit. The functioning unit constructed of software and the functioning unit constructed of a dedicated operational circuit may be used together. For example, each of the functioning units can be formed of an electronic circuit such as a CPU (Central Processing Unit), an ASIC (Application Specific Integrated Circuit), a PLD (Programmable Logic Device) such as a FPGA (Field Programmable Gate Array), or the like.

The processing part 112 includes an image data receiving unit 121 and an exterior orientation parameter calculating unit 122. The image data receiving unit 121 receives data of images from the cameras 113 and 115. The exterior orientation parameter calculating unit 122 calculates the exterior orientation parameters of the camera 115 based on the image that is photographed by the camera 113. Although not shown in the figures, the processing part 112 has a function for obtaining three-dimensional data of the surrounding circumstances where the vehicle 100 has traveled, based on, for example, the data of the images obtained by the cameras 113 and 115. By using this three-dimensional data, a three-dimensional model of the conditions through which the vehicle 100 has traveled can be generated. Calculation of Exterior Orientation Parameters of Camera 115

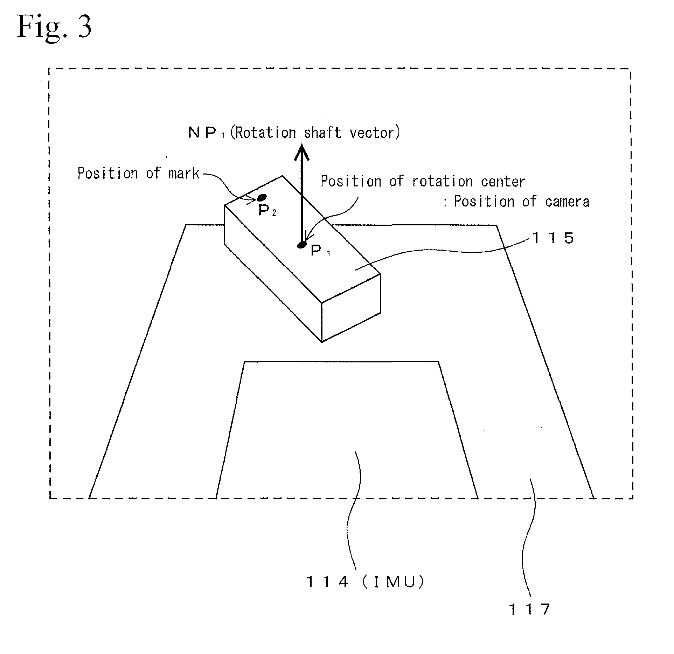

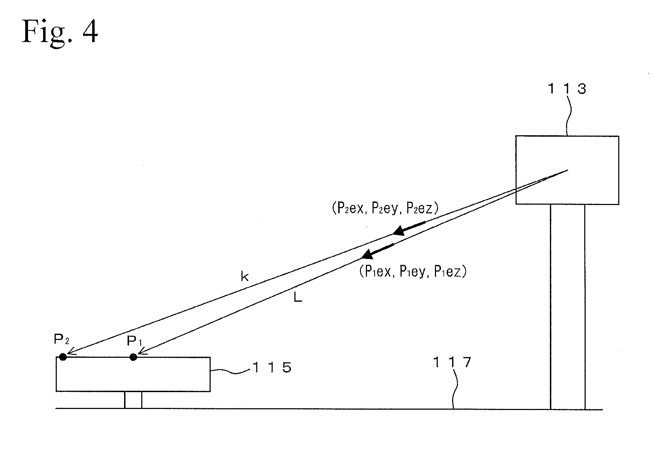

Fig. 3 is a schematic drawing showing the content of an image that is photographed by the camera 113. Fig. 4 is a schematic drawing showing a positional relationship between the cameras 113 and 115. It should be noted that the IMU 114 is omitted in Fig. 4.

An example of a processing performed by the exterior orientation parameter calculating unit 122 will be described hereinafter. Here, the exterior orientation parameters of the camera 115 with respect to the IMU 114 are calculated in conditions in which the direction of the rotation shaft of the camera 115 and the distance L from the camera 113 to the camera 115 are already known. The camera 115 includes a mark for indicating a rotation center $P_1$ and a mark for indicating a point $P_2$ near an end of the camera 115, which are provided on a top surface thereof. The position of the camera 115 is determined by the rotation center $P_1$.

First, the camera 115 is photographed by the camera 113. Fig. 3 shows a condition within a visual field for the photographed image. After an image as shown in Fig. 3 is obtained, image coordinate values (pixel coordinate values) of the rotation center $P_1$ are obtained, and directional unit vector ($P_1ex$, $P_1ey$, $P_1ez$), which represents direction from the camera 113 to the rotation center $P_1$, is obtained based on the image coordinate values. That is, if the image coordinate values (position in the image) of the rotation center $P_1$ are determined, the direction of the rotation center $P_1$ from the camera 113 is determined. The unit vector specifying the direction of the rotation center $P_1$ from the camera 113 is directional unit vector ($P_1ex$, $P_1ey$, $P_1ez$). The directional unit vector ($P_1ex$, $P_1ey$, $P_1ez$) is unit vector that specifies the direction from the camera 113 to the rotation center $P_1$ in a coordinate system of the reference camera. Since the distance L from the camera 113 to the rotation center $P_1$ is known beforehand, coordinate values ($P_1x$, $P_1y$, $P_1z$) of the rotation center $P_1$ in the coordinate system (reference camera coordinate system) used in the camera 113 are calculated from the direction of the directional unit vector and the distance L.

Since the direction of the rotation shaft of the camera 115 is set in advance, a rotational plane of the camera 115 in the reference camera coordinate system is defined by using the coordinate values ($P_1x$, $P_1y$, $P_1z$) of the rotation center $P_1$ in the reference camera coordinate system. The formula for the rotational plane is expressed as the following First Formula in which rotation shaft vector of the camera 115 is expressed as ($NP_1x$, $NP_1y$, $NP_1z$).

First Formula

$$NP_1x(x - P_1x) + NP_1y(y - P_1y) + NP_1z(z - P_1z) = 0$$

Next, coordinate values ($P_2x$, $P_2y$, $P_2z$) of the point $P_2$ in the reference camera coordinate system are calculated as follows. First, directional unit vector ($P_2ex$, $P_2ey$, $P_2ez$) of the point $P_2$ identified in the image is obtained based on image coordinate values of the point $P_2$. The directional unit vector ($P_2ex$, $P_2ey$, $P_2ez$) is unit vector that specifies the direction from the camera 113 to the point $P_2$ in the reference camera coordinate system.

Here, if a distance from the camera 113 to the point $P_2$ is expressed as k, which is unknown at this stage, the coordinate values of the point $P_2$ in the reference camera coordinate system are ($k \cdot P_2ex$, $k \cdot P_2ey$, $k \cdot P_2ez$). Since the

point $P_2$ is a point in the rotational plane expressed by the First Formula, the First Formula holds even by substituting the coordinate values of the point $P_2$ for the First Formula. Therefore, the following Second Formula is established by substituting the symbols (x, y, z) in the First Formula with the coordinate values (k·$P_2$ex, k·$P_2$ey, k·$P_2$ez).

Second Formula

$$NP_1x(k \cdot P_2ex - P_1x) + NP_1y(k \cdot P_2ey - P_1y) + NP_1z(k \cdot P_2ez - P_1z) = 0$$

Since the unknown value is the distance k from the camera 113 to the point $P_2$ in the Second Formula, the value of k is calculated from the Second Formula. When a point is shifted from the camera 113 in the direction of ($P_2$ex, $P_2$ey, $P_2$ez) by the distance k, the point corresponds to the point $P_2$, whereby the coordinate values ($P_2$x, $P_2$y, $P_2$z) in the reference camera coordinate system of the point $P_2$ are expressed by the following Third Formula.

Third Formula

$$(P_2x, \quad P_2y, \quad P_2z) = (k \cdot P_2ex, k \cdot P_2ey, k \cdot P_2ez)$$

In the Third Formula, the values of ($P_2$ex, $P_2$ey, $P_2$ez) are obtained based on the image coordinate values of the point $P_2$, and the distance k is calculated from the Second Formula. Therefore, the coordinate values ($P_2$x, $P_2$y, $P_2$z) of the point $P_2$ are calculated. Here, the Third Formula is described based on the coordinate system of the camera 113 (reference camera coordinate system). Since the exterior orientation parameters of the camera 113 with respect to the IMU 114, that is, the position and the attitude in the IMU coordinate system (coordinate system used in the IMU 114) of the camera 113 are known beforehand, the coordinate system of the Third Formula is converted into the IMU coordinate system. This also applies in the case of the coordinate values ($P_1$x, $P_1$y, $P_1$z) of the rotation center $P_1$. Thus, the coordinate values of the rotation center $P_1$ and the point $P_2$ in the IMU coordinate system are calculated.
By calculating the coordinate values of the rotation center $P_1$ in the IMU coordinate system, the position in the IMU coordinate system of the camera 115 is determined. In addition, the direction in the IMU coordinate system of the camera 115 is determined from the coordinate values of the rotation center $P_1$ and the point $P_2$. Thus, the exterior orientation parameters (position and attitude) of the camera 115 with respect to the IMU 114 are calculated.
The calculation of the exterior orientation parameters of the camera 115 based on the image photographed by the camera 113 is not very precise and may include errors in many cases. However, in a processing for obtaining accurate exterior orientation parameters, the processing speed and the precision can be improved by providing initial values, even though they are approximate values. Accordingly, as a manner of utilizing the present invention, approximate exterior orientation parameters may be calculated by using the present invention and be used as initial values, and then a processing for calculating exterior orientation parameters with higher precision may be performed.

2. Second Embodiment

The present invention can also be utilized in the case in which the position of the rotation center $P_1$ is known beforehand in the First Embodiment. In this case, by performing the calculation of the First Formula and the subsequent Formulas, the attitude in the IMU coordinate system of the camera 115 is calculated.

3. Other Matters

The device in which exterior orientation parameters are to be calculated is not limited to the camera and may be a laser scanner. The present invention can also be utilized for calculating the position of the GNSS antenna. In this case, the GNSS antenna is photographed, and then the position in the IMU coordinate system of the GNSS antenna is calculated based on the photographed image.
A characteristic portion, such as an edge portion or the like, of the camera 115 may be detected as a point $P_1$ or a point $P_2$ instead of determining the position of the mark. This also applies to the case in which another device such as a laser scanner is the object to be calculated.
The distance between the camera 113 and the camera 115 may be determined by actual measurement. As the method for actually measuring the distance, a method of using, for example, laser light, the principle of triangulation, or the like, may be described. For example, in a case of using the principle of triangulation, a third camera is used, in which exterior orientation parameters in the IMU coordinate system are determined, and a stereo photograph of the camera 115 is measured by using the third camera and the camera 113, whereby the position in the IMU coordinate system of the camera 115 is calculated.

The present invention can also be applied in a case of using a member, such as a plate, on which one or more optical devices are to be fixed (or are already fixed). In this case, the position and the attitude of the member, with respect to the IMU coordinate system, are photographed by a camera in which exterior orientation parameters are determined beforehand, and the position and the attitude in the IMU coordinate system of the member are calculated from the photographed image.

For example, a case of arranging a rotatable plate instead of the camera 115 shown in Figs. 1 and 3 may be described. This plate has a rotation center $P_1$ as in the case of the camera 115 and is provided with a mark of a point $P_2$. The plate functions as a base on which cameras and/or laser scanners are to be fixed. In this case, the position and the attitude of the plate in the IMU coordinate system are calculated in the same manner as in the case of the camera 115.

In recent years, technology for performing automatic driving or assisted driving of a vehicle by obtaining surrounding three-dimensional information from the vehicle has been publicly known. The present invention can also be utilized for obtaining exterior orientation parameters of an on-vehicle camera used for this technique.

The present invention can be utilized for techniques of determining exterior orientation parameters of devices and members.

**Claims**

1.  An image processing device comprising:

    an image data receiving circuit having a structure that receives data of an image that is obtained by photographing a device or a member, in which exterior orientation parameters in a predetermined coordinate system are unknown, with a reference camera in which exterior orientation parameters in the predetermined coordinate system are determined; and
    an exterior orientation parameter calculating circuit having a structure that calculates the exterior orientation parameters in the predetermined coordinate system of the device or the member based on the photographed image,
    wherein the device or the member is rotatable around a rotation shaft which is in a predetermined direction, and the exterior orientation parameters in the predetermined coordinate system of the device or the member are calculated after a distance between the reference camera and the device or the member is determined.

2.  The image processing device according to claim 1, wherein the distance between the reference camera and the device or the member is a distance L between the reference camera and a specific portion of the device or the member, and the exterior orientation parameter calculating circuit having a structure that determines a direction from the reference camera to the specific portion based on image coordinate values of the specific portion of the device or the member in the photographed image and that calculates the position in the predetermined coordinate system of the specific portion from the direction and the distance L.

3.  The image processing device according to claim 2, wherein an attitude in the predetermined coordinate system of the device or the member is calculated by selecting the specific portion at two points.

4.  An image processing method comprising:

    receiving data of an image that is obtained by photographing a device or a member, in which exterior orientation parameters in a predetermined coordinate system are unknown, with a reference camera in which exterior orientation parameters in the predetermined coordinate system are determined; and
    calculating the exterior orientation parameters in the predetermined coordinate system of the device or the member based on the photographed image,
    wherein the device or the member is rotatable around a rotation shaft which is in a predetermined direction, and the exterior orientation parameters in the predetermined coordinate system of the device or the member are calculated after a distance between the reference camera and the device or the member is determined.

5.  A recording medium in which a program read and executed by a computer is stored, the program allowing the computer to receive data of an image that is obtained by photographing a device or a member, in which exterior orientation parameters in a predetermined coordinate system are unknown, with a reference camera, in which exterior orientation parameters in the predetermined coordinate system are determined, and to calculate the exterior orientation parameters in the predetermined coordinate system of the device or the member based on the photographed image,

wherein the device or the member is rotatable around a rotation shaft which is in a predetermined direction, and the exterior orientation parameters in the predetermined coordinate system of the device or the member are calculated after a distance between the reference camera and the device or the member is determined.

# Fig. 1

NP₁ (Rotation shaft vector)

P₁ (Position of rotation center
: Position of camera)

Distance L

1 1 3
1 1 4
1 1 2
1 1 1

1 1 5

I MU
Processing part

1 1 7
1 1 0
1 0 0

# Fig. 2

Processing part

Image data receiving unit — 1 2 1

Exterior orientation
parameter calculating unit — 1 2 2

1 1 2

Fig. 3

NP₁(Rotation shaft vector)

Position of mark

Position of rotation center

: Position of camera

115

114 (IMU)

117

Fig. 4

Europäisches
Patentamt

European
Patent Office

Office européen
des brevets

## EUROPEAN SEARCH REPORT

Application Number

EP 15 18 1714

### DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | EP 1 462 997 A2 (FANUC LTD [JP]) 29 September 2004 (2004-09-29) | 1 | INV. G01C21/36 |
| A | * paragraph [0015] * ----- | 2-5 | G01C15/00 G05D1/02 G06T7/00 |

TECHNICAL FIELDS
SEARCHED      (IPC)

G01C
G06K
G05D
G06T

The present search report has been drawn up for all claims

| Place of search | Date of completion of the search | Examiner |
|---|---|---|
| The Hague | 21 January 2016 | Nikoli, Revekka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 1714

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2016

| Patent document cited in search report | | Publication date | Patent family member(s) | | Publication date |
|---|---|---|---|---|---|
| EP 1462997 | A2 | 29-09-2004 | EP | 1462997 A2 | 29-09-2004 |
| | | | JP | 3842233 B2 | 08-11-2006 |
| | | | JP | 2004295223 A | 21-10-2004 |
| | | | US | 2004190766 A1 | 30-09-2004 |

EPO FORM P0459

For more details about this annex : see Official Journal of the European Patent Office, No. 12/82

**EP 2 990 765 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013040886 A